# EUROPÄISCHE PATENTSCHRIFT

(11) **EP 1 630 051 B1**
(45) Veröffentlichungstag und Bekanntmachung des Hinweises auf die Patenterteilung: **20.02.2008**
(21) Anmeldenummer: 05107832.7
(22) Anmeldetag: 26.08.2005
(51) Int. Cl.: B60R 25/10, B60Q 1/26

(54) **Anordnung zur Anzeige eines Fahrzeugstandorts**
Device for showing a vehicle location
Dispositif pour monter l'emplacement d'un véhicule

(30) Priorität: 26.08.2004 DE 102004041245
(43) Veröffentlichungstag der Anmeldung: 01.03.2006
(73) Patentinhaber: Robert Bosch GmbH, 70442 Stuttgart (DE)
(72) Erfinder: Franz, Gerald, 71522, Backnang (DE)

(56) Entgegenhaltungen:
- US-A- 3 506 956
- US-B1- 6 580 368

## Beschreibung

### Stand der Technik

Die Erfindung geht von einer Anordnung zur Anzeige eines Fahrzeugstandortes nach der Gattung des unabhängigen Patentanspruchs aus.

Es sind Kraftfahrzeuge, vornehmlich Personenkraftwagen, bekannt, bei denen eine Türverriegelung mittels eines Fernbedienungssenders geöffnet oder geschlossen werden kann. Dazu strahlt der Fernbedienungssender auf Tastendruck ein entsprechendes Funk-Femsteuersignal aus, welches von einem fahrzeugseitigen Sender empfangen und ausgewertet wird. Enthält das Fernsteuersignal einen vorgegebenen Zugangs-Code, wird die Türverriegelung in Reaktion auf das Fernsteuersignal entsprechend dem Fernbedienungssignal betätigt, also geöffnet oder geschlossen. Gleichzeitig mit der Betätigung der Türverriegelung werden oftmals die Fahrtrichtungsanzeiger (Blinker) des Fahrzeugs betätigt, um dem Benutzer den Empfang des Fernbedienungssignals und eine entsprechende Betätigung der Fahrzeugverriegelung anzuzeigen.

Bei verschiedenen Fahrzeugtypen sind die Fahrtrichtungsanzeiger beispielsweise in seitlich über die Fahrzeugabmessungen hinaus ragenden Gehäusen für Rückspiegel angeordnet.

Die gattungsbildende US 6 580 368 B1 offenbart eine Anordnung zur Anzeige eines Fahrzeugstandorts mit einem Haltelement, welches an einem Fahrzeug befestigt ist, einem Signalgeber, welcher an dem Halteelement angeordnet ist, einem Empfänger für Fernbedienungssignale und einer Steuerung zur Verifizierung eines in einem Fernbedienungssignals zur Ansteuerung des Signalgebers in Reaktion auf empfangene Fernbedienungssignale, wobei das das Halteelement derart ausgebildet oder derart einstellbar ist, dass der Signalgeber über äußere Abmessungen des Fahrzeugs nach oben hinaus ragt. Die Anordnung weist dabei einen transparenten Hohlstab auf, der motorisch teleskopierbar ausgebildet ist und im ausgefahrenen Zustand als Lichtleiter für eine als Signalgeber dienende Lichtquelle fungiert. Das Licht der an dem dem Fahrzeug zugewandten Ende des Stabes angeordneten Lichtquelle wird durch den Stab vom Fahrzeug nach oben weg geführt. Dies hat den Effekt, dass der außen stehende Betrachter bei Betätigung der Fernbedienung einen lichtdurchfluteten Stab sieht, der ein Auffinden des Fahrzeugs erleichtert.

Die US 3 506 956 A offenbart eine ähnliche Anordnung. Auch diese weist ein stabförmiges, lichtdurchlässiges Halteelement auf, in dem eine Antenne angeordnet sein kann. Am oberen Ende des Halteelements ist eine lichtdurchlässige Kugel angeordnet. Am dem Fahrzeug zugewandten, unteren Ende des Stabes ist eine Glühbirne angeordnet, die bei Aktivierung der Suchfunktion aufleuchtet und damit zum einen den Stab an sich und ferner auch die Kugel am oberen Ende anstrahlt. Damit ergibt sich für den außen stehenden Betrachter wiederum der Anblick eines erleuchteten Stabes, der ein Auffinden des Fahrzeugs erleichtert.

### Vorteile der Erfindung

Die Erfindung mit den Merkmalen des unabhängigen Patentanspruchs hat den Vorteil, dass das Auffinden eines abgestellten Fahrzeugs, insbesondere auf einem größeren und möglicherweise stark frequentierten Parkplatz, erleichtert wird. Hierbei ist es von besonderem Vorteil, dass ein Signalgeber, insbesondere ein optischer Signalgeber, über äußere Fahrzeugabmessungen nach oben hinaus ragt. Damit wird die Sichtbarkeit eines solchen optischen Signalgebers verbessert. Weiter ist es von Vorteil, dass hierzu bereits ein einziger Signalgeber mit Rundstrahlcharakteristik ausreicht. Auch im Falle eines akustischen Signalgebers wird dessen Hörbarkeit und auch Ortbarkeit durch diese Maßnahme verbessert, da das Schallsignal im Idealfall ohne Abschattungen und Reflektionen das Ohr des Benutzers erreichen kann.

Vorteilhaft dient zur Aufnahme des Signalgebers eine Fahrzeugantenne in Form einer Stabantenne, die regelmäßig weit nach oben über äußere Fahrzeugabmessungen hinaus ragt. Vorteilhaft ist dabei der Signalgeber am oberen, also dem Fahrzeug abgewandten Ende der Antenne angeordnet.

Vorteilhaft ist auch, wenn die Fahrzeugantenne mittels eines motorischen Antriebs in eine Position bringbar ist, in der der Signalgeber über äußere Abmessungen des Fahrzeugs nach oben hinaus ragt. Darüber hinaus ist es von Vorteil, wenn eine Steuerung der Anordnung ferner dazu ausgebildet ist, den Antennen-Antriebsmotor in Reaktion auf empfangene Fernbedienungssignale zum Ausfahren der Fahrzeugantenne anzusteuern.

### Zeichnungen

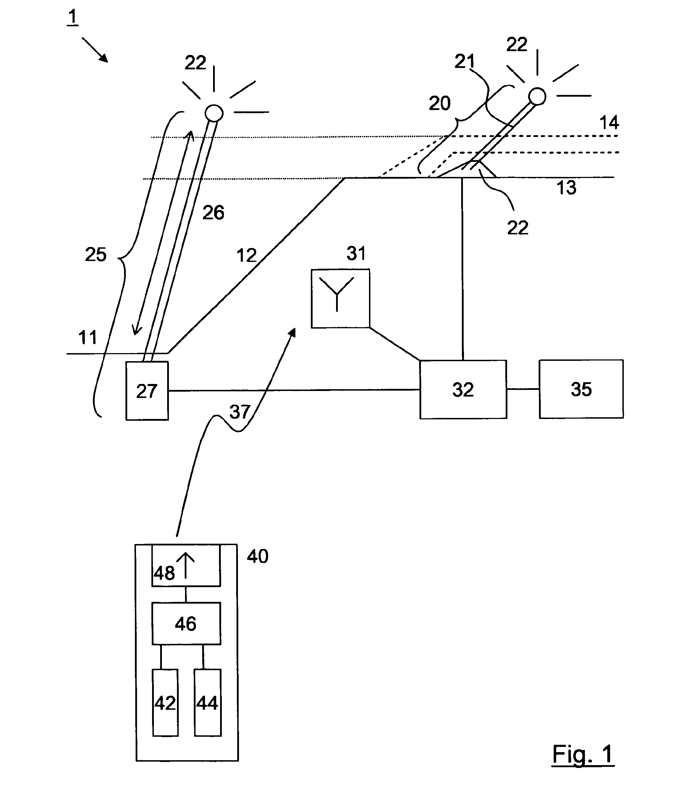

Ein vorteilhaftes Ausführungsbeispiel der Erfindung ist in der Figur dargestellt und wird nachfolgend näher erläutert. Die Figur zeigt ein Fahrzeug mit den wesentlichen Elementen der erfindungsgemäßen Anordnung zur Anzeige eines Fahrzeugstandorts.

### Beschreibung der Ausführungsbeispiele

In der Figur bezeichnet "1" ein Kraftfahrzeug, hier Pkw, mit der erfindungsgemäßen Anordnung. In der Figur ist der Pkw in der Seitenansicht dargestellt, die äußeren Konturen des Pkw sind durch eine Motorhaube 11 bzw. Kotflügelkante, eine Windschutzscheibe 12 und das Fahrzeugdach 13 gegeben. Auf dem Fahrzeugdach 13 kann beispielsweise zusätzlich eine sogenannte Dachreling 14 zur Aufnahme eines Gepäckträgers angeordnet sein.

Weiter ist auch dem Fahrzeugdach eine Antenne 20 zum Empfang von Rundfunksignalen und/oder für ein Mobilfunktelefon angeordnet. Diese Antenne 20 ist herkömmlich als Stabantenne ausgeführt und weist einen Antennenstab 21 sowie einen Antennenfuß 22 zur Montage und Halterung des Antennenstabs 21 auf dem Fahrzeugdach 13 auf. Die Antenne 20 ragt über das Fahrzeugdach 13 nach oben hinaus. Im Falle einer zusätzlich vorgesehenen Dachreling 14 ragt das obere Ende des Antennenstabs 21 und damit der Antenne 20 auch über die Dachreling 14 hinaus.

Gemäß einer alternativen Ausführungsform verfügt das Fahrzeug alternativ oder ergänzend über eine weitere Antenne 25, die im Kotflügel 11 des Fahrzeugs 1 angeordnet ist. Auch diese Antenne 25 ist in Form einer Stabantenne ausgeführt. Der Antennenstab 26 der weiteren Antenne 25 ragt in der hier dargestellten Position über das Fahrzeugdach 13 bzw. die Dachreling 14 hinaus. Der Antennenstab 26 der weiteren Antenne 25 ist als Teleskopstab ausgebildet und ist mittels eines motorischen Antriebs 27 in seiner Länge verstellbar. Vorzugsweise sind Teleskopstab und Antriebsmotor derart ausgebildet, dass der Teleskopstab zwei Endpositionen einnehmen kann, nämlich eine erste Position, in der er näherungsweise vollständig in den Kotflügel 11 des Fahrzeugs versenkt ist und eine zweite Position, in der er seine maximale Länge einnimmt und sein oberes also der Fahrzeugkarosserie abgewandtes Ende über die äußeren Fahrzeugabmessungen, hier das Fahrzeugdach 13 bzw. die gegebenenfalls vorhandene Dachreling 14 nach oben hinaus ragt.

Erfindungsgemäß ist vorzugsweise am oberen, also dem Fahrzeug abgewandten Ende des Antennenstabs 21 der Dachantenne 20 ein Signalgeber 22 angeordnet. Der Signalgeber 22 ist vorzugsweise als optischer Signalgeber ausgebildet. Vorzugsweise handelt es sich bei dem Signalgeber 22 um eine Lichtquelle mit Rundumstrahlcharakteristik, beispielsweise eine besonders hell leuchtende Leuchtdiode.

In der in der Figur dargestellten Position der Dachantenne 20 bzw. des Antennenstabs 21 als Halteelement für den Signalgeber ist dieser, da er nach oben über die Fahrzeugabmessungen hinaus ragt, aus allen Richtungen rund um das Fahrzeug sichtbar. Insbesondere ist der Signalgeber nicht durch Fahrzeugteile abgeschattet. Darüber hinaus ist auch zu erwarten, dass der Signalgeber 22 bei auf einem stark frequentierten Parkplatz abgestellten Fahrzeug 1 auch über die Dächer von um das Fahrzeug 1 herum abgestellten weiteren Fahrzeugen hinweg sichtbar ist.

Bei einer alternativen Ausführungsform kann es sich bei dem Signalgeber 22 auch um einen akustischen Signalgeber, etwa einen Piezo-Schallgeber handeln, wie er beispielsweise auch in Mobiltelefonen zur Erzeugung von Klingeltönen verwendet wird. Eine Anordnung an der Spitze des Antennenstabs 21 bewirkt, dass der vom Piezo-Schallgeber erzeugte Schall leichter geortet werden kann, da er nicht durch Fahrzeugteile des Fahrzeugs 1 oder umgebender Fahrzeuge abgelenkt wird.

Bei der hier beschriebenen bevorzugten Ausführungsform der Erfindung sind am oberen Ende des Halteelements 21 respektive Antennenstabs 21 sowohl ein optischer als auch ein akustischer Signalgeber 22 der oben beschriebenen Art angeordnet.

Verfügt das Fahrzeug 1 wie in der Figur dargestellt, alternativ oder ergänzend über eine weitere, beispielsweise auf dem Kotflügel 11 angeordnete Antenne 25, sind an deren oberen, also dem Fahrzeug abgewandten Ende, der oder die beschriebenen Signalgeber 22, also optischer und/oder akustischer Signalgeber vorgesehen. Hier dient der Teleskopstab 26 der weiteren Antenne als Halteelement für den oder die Signalgeber 22.

Der oder die Signalgeber 22 werden von einer Ansteuerschaltung 32 angesteuert. Als Folge der Ansteuerung durch die Ansteuerschaltung 32 blinkt beispielsweise die Signalleuchte als Beispiel des optischen Signalgebers 22 mit einer bestimmten Frequenz. Im Falle des akustischen Signalgebers 22 gibt dieser beispielsweise einen gepulsten Signalton ab. Alternative Signalformen des optischen wie auch des akustischen Signalgebers sind möglich und liegen im Bereich der Erfindung.

Die Ansteuerschaltung 32 wertet dazu empfangene Fernbedienungssignale aus, die sie über einen Empfänger 31 für Fernbedienungssignale erhält. Der Fernbedienungssignal-Empfänger 31 ist beispielsweise Teil einer fernbedienbaren Schließvorrichtung bzw. Zentralverriegelungsanlage 35 für die Fahrzeugtüren und den Kofferraumdeckel des Fahrzeugs.

Zur Fernbedienung der Schließvorrichtung 35 ist eine Fernbedienungs-Sendereinrichtung 40 vorgesehen. Diese ist in einem Gehäuse angeordnet, an dessen Oberfläche beispielsweise zwei Bedienelemente 42 und 44 angeordnet sind. Das erste Bedienelement 42 dient der Erzeugung eines Schließsignals, das zweite Bedienelement 44 der Erzeugung eines Öffnen-Signals. Dazu sind die beiden Bedienelemente mit einem Coder 46 verbunden, der in Abhängigkeit der Betätigung eines der beiden Bedienelemente 42, 44 einen entsprechenden Code zuordnet. Darüber hinaus ordnet der Coder 46 auch einen fahrzeugspezifischen Zugangscode zu, welcher idealer weise nur für das Fahrzeug 1 vorgesehen ist. Die Fernbedienungssendeeinrichtung 40 weist schließlich einen Sender 48 auf, welcher eine elektromagnetische Trägerschwingung mit den Bediencode nach Maßgabe der Betätigung eines der Bedienelemente 42 oder 44 und zusätzlich dem fahrzeugspezifischen Zugangscode moduliert und diese Schwingung, also das Fernbedienungssignal 37 aussendet.

Der Fernbedienungssignal-Empfänger 31 ist dazu ausgebildet, das vom Sender 48 abgestrahlte Fernbedienungssignal 37 zu empfangen und zu demodulieren. Die darin enthaltenen Codes, also der Fernbedienungscode sowie der Zugangscode werden in der Steuerung 32 ausgewertet. Zunächst erfolgt in der Steuerung 32 eine Verifizierung des Zugangscodes. Sofern der empfangene Zugangscode als zu dem Fahrzeug 1 gehörig verifiziert ist, wird der empfangene Fernbedienungscode in ein entsprechendes Steuersignal umgesetzt. Im Falle der Betätigung der Schließen-Taste 42 an der Fernbedienungseinrichtung erzeugt die Steuerung 32 ein Schließen-Signal für die Zentralverriegelung respektive Verrieglungseinrichtung 35 des Fahrzeugs, worauf diese die Fahrzeugtüren sowie den Kofferraumdeckel verschließt. Bei der Betätigung der Öffnen-Taste 44 erzeugt die Steuerung 32 ein Öffnen-Signal für die Zentralverriegelung respektive Verrieglungseinrichtung 35 des Fahrzeugs, worauf diese die Fahrzeugtüren sowie den Kofferraumdeckel entriegelt.

Erfindungsgemäß erzeugt die Steuerung 32 bei Empfang eines Öffnen-Fembedienungssignals von der Fernbedienungseinrichtung 40 zusätzlich ein Ansteuersignal für den oder die Signalgeber 22 der auf dem Dach 13 des Fahrzeugs 1 angeordneten Fahrzeugantenne 20 an, so dass dieser aufleuchtet und/oder ein akustisches Signal abgibt.

Im Falle der im Kotflügel 11 des Fahrzeugs 1 angeordneten weiteren Fahrzeugantenne 25 erzeugt die Steuerung 32 entsprechend ein Signal zur Ansteuerung des Motors 27, welches bewirkt, dass die im Kotflügel 11 des Fahrzeugs versenkte Teleskopantenne aus diesem heraus in ihre in der Figur darstellte Endposition ausgefahren wird, in der das obere Ende ihres Teleskopstabes 26 das Fahrzeugdach 13 und ggf. die Dachreling 14 überragt. Zusätzlich erzeugt die Steuerung 32 schon während dem Ausfahren der Antenne respektive des Teleskopstabes 26 oder alternativ nach Erreichen der Endstellung der Antenne 25 das Signal zur Ansteuerung des oder der Signalgeber/s 22, welche/r am oberen Ende des Teleskop-Antennenstabs 26 angeordnet ist oder sind.

Alternativ kann vorgesehen sein, dass die Fernbedienungs-Sendeeinrichtung 40 ein zusätzliches Bedienelement aufweist, mit dem die beschriebene Ortungsfunktion, also die Ansteuerung des Signalgebers 22 auslösbar ist. In diesem Fall wird das Fernbedienungssignal wie beschrieben mit einem entsprechend eigens hierfür vorgesehenen Code gebildet. Alternativ kann diese Funktion auch durch beispielsweise Betätigung der Öffnen-Taste für eine vorgegebene verlängerte Zeitdauer ausgelöst werden. Alternativ kann die erfindungsgemäße beschriebene Lokalisierungsfunktion auch durch kurzes Antippen der Öffnen-Taste ausgelöst werden, während die Öffnen-Funktion durch Tippen der Taste für eine mindestens eine vorgegebene Zeit ausgelöst wird. Weitere mögliche alternative Ausführungsformen liegen im Bereich der Erfindung.

## Patentansprüche

1. Anordnung zur Anzeige eines Fahrzeugstandorts mit
einem Haltelement (21, 26), welches an einem Fahrzeug (1) befestigt ist,
einem Signalgeber (22), welcher an dem Halteelement (21, 26) angeordnet ist,
einem Empfänger (31) für Fernbedienungssignale (37) und
einer Steuerung (32) zur Verifizierung eines in einem Fernbedienungssignal (37) enthaltenen Codes und zur Ansteuerung des Signalgebers (22) in Reaktion auf empfangene Fernbedienungssignale (37), welche einen vorgegebenen Code enthalten,
wobei das das Halteelement (21, 26) derart ausgebildet oder derart einstellbar ist, dass der Signalgeber (22) über äußere Abmessungen (13, 14) des Fahrzeugs (1) nach oben hinaus ragt, und
dass das Haltelement (21, 26) eine Fahrzeugantenne in Form einer Stabantenne (20, 25) ist,
**dadurch gekennzeichnet, dass** der Signalgeber (22) als elektrooptischer Signalgeber zur Umsetzung eines elektrischen in ein optisches Signal oder als elektroakustischer Signalgeber zur Umsetzung eines elektrischen Signals in ein akustisches Signal ausgebildet und an dem dem Fahrzeug abgewandten Ende der Fahrzeugantenne (20, 25) .. angeordnet ist

2. Anordnung nach Anspruch 1, **dadurch gekennzeichnet, dass** die Fahrzeugantenne (25) teleskopierbar ausgebildet ist.

3. Anordnung nach einem der Ansprüche 1 bis 2, **dadurch gekennzeichnet, dass** die Fahrzeugantenne (25) mittels eines motorische Antriebs (27) in eine Position bringbar ist, in der der Signalgeber (22) über äußere Abmessungen des Fahrzeugs nach oben hinaus ragt.

4. Anordnung nach Anspruch 3, **dadurch gekennzeichnet, dass** die Steuerung (32) ferner dazu ausgebildet ist, den Antennen-Antriebsmotor (27) in Reaktion auf empfangene Fernbedienungssignale (37) zum Ausfahren der Fahrzeugantenne (25) anzusteuern.

## Claims

1. Arrangement for displaying the location of a vehicle having a holding element (21, 26) which is attached to a vehicle (1), a signal transmitter (22) which is arranged on the holding element (21, 26), a receiver (31) for remote control signals (37) and a controller (32) for verifying a code which is contained in a remote control signal (37) and for actuating the signal transmitter (22) in reaction to received remote control signals (37) which contain a predefined code,
wherein the holding element (21, 26) is embodied or can be adjusted in such a way that the signal transmitter (22) projects upwards beyond external dimensions (13, 14) of the vehicle (1), and wherein the holding element (21, 26) is a vehicle antenna in the form of a rod antenna (20, 25), **characterized in that** the signal transmitter (22) is embodied as an electro-optical signal transmitter for converting an electrical signal into an optical signal or as an electro-acoustic signal transmitter for converting an electrical signal into an acoustic signal and is arranged at the end of the vehicle antenna (20, 25) facing away from the vehicle.

2. Arrangement according to Claim 1, **characterized in that** the vehicle antenna (25) is of telescopic design.

3. Arrangement according to one of Claims 1 to 2, **characterized in that** the vehicle antenna (25) can be moved, by means of a motor drive (27), into a position in which the signal transmitter (22) projects upwards beyond external dimensions of the vehicle.

4. Arrangement according to Claim 3, **characterized in that** the controller (32) is also designed to actuate the antenna drive motor (27) in reaction to received remote control signals (37) in order to extend the vehicle antenna (25).

## Revendications

1. Dispositif pour indiquer l'emplacement d'un véhicule comprenant
- un élément de support (21, 26) fixé au véhicule (1),
- un générateur de signal (22) sur l'élément de support (21, 26),
- un récepteur (31) pour des signaux de télécommande (37) et
- une commande (32) pour vérifier un code contenu dans le signal de télécommande (37) et pour commander le générateur de signal (22) en réaction aux signaux de télécommande (37), reçus, correspondant à un code prédéfini,
- l'élément de support (21, 26) étant réalisé ou réglable pour que le générateur de signal (22) dépasse du contour extérieur (13, 14) du véhicule (1), vers le haut et
- l'élément de support (21, 26) est l'antenne du véhicule sous la forme d'une antenne tige (20, 25),
**caractérisé en ce que**
le générateur de signal (22) est un générateur de signal électro-optique convertissant un signal électrique en un signal optique ou un générateur de signal électro-acoustique pour convertir un signal électrique en un signal acoustique et ce générateur est prévu à l'extrémité de l'antenne (20, 25) non située du côté du véhicule.

2. Dispositif selon la revendication 1,
**caractérisé en ce que**
l'antenne (25) du véhicule est télescopique.

3. Dispositif selon l'une des revendications 1 et 2,
**caractérisé en ce que**
l'antenne (25) du véhicule est mise par un entraînement par moteur (27) dans une position dans laquelle le générateur de signal (22) dépasse vers le haut du contour extérieur du véhicule.

4. Dispositif selon la revendication 3,
**caractérisé en ce que**
la commande (32) est en outre réalisée pour commander le moteur (27) de l'antenne en réaction aux signaux de télécommande (37) reçus pour déployer l'antenne (25) du véhicule.
